# EUROPÄISCHE PATENTSCHRIFT

(11) **EP 3 909 468 B1**
(45) Veröffentlichungstag und Bekanntmachung des Hinweises auf die Patenterteilung: **14.05.2025**
(21) Anmeldenummer: 21169578.8
(22) Anmeldetag: 21.04.2021
(51) Int. Cl.: A47B 77/02, F16J 15/06, F16J 15/10, F16J 15/02

(54) **DICHTELEMENT FÜR EINE IN EINE ARBEITSPLATTE INTEGRIERTE AUFNAHMEKAMMER**
SEALING ELEMENT FOR A RECEIVING CHAMBER INTEGRATED IN A WORKTOP
ÉLÉMENT D'ÉTANCHÉITÉ POUR UNE CHAMBRE DE RÉCEPTION INTÉGRÉE À UNE PLAQUE DE TRAVAIL

(30) Priorität: 11.05.2020 DE 102020112621
(43) Veröffentlichungstag der Anmeldung: 17.11.2021
(73) Patentinhaber: Miele & Cie. KG, 33332 Gütersloh (DE)
(72) Erfinder: Wilkens, Henrik, 49080 Osnabrück (DE); Bergmeier, Kai, 32278 Kirchlengern (DE); Bergmeier, Tino, 32257 Bünde (DE); Ennen, Volker, 32257 Bünde (DE); Thomas, Sebastian, 85293 Reichertshausen (DE); Hormann, Michael, 33332 Gütersloh (DE)

(56) Entgegenhaltungen:
- EP-A1- 1 818 619
- DE-A1- 10 161 485
- DE-U1- 202019 100 512
- GB-A- 2 313 440
- JP-A- H10 185 211
- US-A1- 2008 264 927

## Beschreibung

Die Erfindung betrifft ein Dichtelement für eine in eine Arbeitsplatte integrierte Aufnahmekammer.

Die Basisstationen von vielen Küchenmaschinen, insbesondere von

Multifunktionsküchenmaschinen, sind groß, sperrig und unhandlich. Die Integration der Funktionalitäten der Stationen in ein Kochfeld oder eine andere Arbeitsplatte machen diese freistehenden Basisstationen überflüssig und schaffen mehr Raum in der Küche. Die Integration einer Multifunktionsküchenmaschine in eine Arbeitsplatte kann über eine geeignete Aufnahmekammer erfolgen. Problematisch ist jedoch ein Eindringen von Wasser und Speisereste aus überkochenden Töpfen in die Aufnahmekammer. EP 1818619 A1 offenbart ein Dichtelement gemäß dem Oberbegriff des Anspruchs 1.

Der Erfindung stellt sich die Aufgabe ein verbessertes Dichtelement für eine in eine Arbeitsplatte integrierte Aufnahmekammer zu schaffen.

Erfindungsgemäß wird diese Aufgabe durch ein Dichtelement für eine in eine Arbeitsplatte integrierte Aufnahmekammer mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen vor allem im Schutz von in einer Aufnahmekammer angeordneten elektronischen Bauteilen einer

Multifunktionsküchenmaschine gegen Flüssigkeiten und anderen bei einem Kochvorgang entstehenden Verunreinigungen. Zudem kann bei Verwendung einer Variante des hier vorgestellten Dichtelements gegebenenfalls auf ein komplexes Abwassermanagement für eine in eine Arbeitsplatte integrierte Multifunktionsküchenmaschine verzichtet werden.

Es wird ein Dichtelement für eine in eine Arbeitsplatte integrierte Öffnung einer zur Aufnahme einer Basisvorrichtung einer Multifunktionsküchenmaschine ausgeformten Aufnahmekammer vorgestellt, wobei das Dichtelement ausgeformt ist, um die Öffnung umlaufend zu umschließen und mit einem Anliegeabschnitt an einer Oberfläche der Arbeitsplatte anzuliegen, wobei sich ein dem Anliegeabschnitt gegenüberliegender Dichtungsteil des Dichtelements an einer dem Mittelpunkt der Öffnung zugewandten Seite weiter von dem Anliegeabschnitt weg erhebt als an einer dem Mittelpunkt der Öffnung abgewandten Seite des Dichtelements.

Gemäß einer alternativen Ausführungsform ist das Dichtelement derart in der Öffnung angeordnet, dass das Dichtelement an einer, die Öffnung begrenzenden Mantelfläche der Arbeitsplatte anliegt und frei von einer Kontaktierung der Oberfläche der Arbeitsplatte ist. Das Dichtelement ist vorzugsweise innerhalb der durch die Mantelfläche der Arbeitsplatte begrenzten Öffnung zu der Ebene der Oberfläche der Arbeitsplatte eben oder coplanar ausgeführt.

Es ist aber auch möglich, dass lediglich der Übergang des Dichtelements an die Arbeitsplatte im Bereich der Öffnungsbegrenzung zur Oberfläche der Arbeitsplatte eben oder flächenbündig ausgeführt ist. Das Dichtelement ist ausgeformt, um die Öffnung innenliegend umlaufend zu umschließen. Gemäß einer Weiterbildung kann ein Dichtungsteil des Dichtelements an einer dem Mittelpunkt der Öffnung zugewandten Seite zu der Ebene der Oberfläche der Arbeitsplatte einen Abstand aufweisen, welcher größer ist als an einer dem Mittelpunkt der Öffnung abgewandten Seite des Dichtelements. Vorzugsweise ist das Dichtungsteil auf einer der Oberfläche der Arbeitsplatte zugewandten Seite gegenüber der Oberfläche der Arbeitsplatte erhaben.

Bei der Arbeitsplatte kann es sich beispielsweise um die Platte eines Kochfeldes, zum Beispiel eine Glaskeramikplatte, handeln, oder um eine auf einer Küchenzeile montierte Arbeitsplatte oder auch um eine Tischplatte. In eine solche Arbeitsplatte kann mithilfe einer abgesenkten Aufnahmekammer die Basisvorrichtung einer Multifunktionsküchenmaschine integriert oder aufgenommen sein, die unter anderem einen Antrieb umfasst sowie eine Kupplungsstelle für ein Funktionsmodul, beispielsweise einen Mixtopf mit Schneidemessern zum Zerkleinern von Nahrungsmittel oder ein ähnlicher geeigneter Behälter. Um eine solch vertieft angeordnete Basisvorrichtung optimal vor beispielsweise überkochendem Wasser aus dem Funktionsmodul zu schützen, kann ein Dichtelement zum Beispiel ringförmig an einer entsprechend ausgeformten Öffnung in der Arbeitsplatte angeordnet werden.

Bei der Multifunktionsküchenmaschine kann es sich um ein zur Zubereitung von Speisen geeignetes Gerät handeln, bei dem ein Funktionsmodul mit einer Basisstation gekuppelt werden kann. Vorzugsweise ist dabei vorgesehen, dass das Funktionsmodul als ein Topfmodul zur Aufnahme der Speise ausgeführt ist. Bei dem hier vorgestellten Gerät kann die Basisvorrichtung durch eine entsprechende Öffnung in beispielsweise eine Arbeitsplatte oder ein Kochfeld integriert werden, wodurch sie aus dem direkten Arbeitsumfeld des Nutzers optisch verschwinden kann. Das Funktionsmodul kann dabei im auf die Basisstation aufgesetzten Zustand zum Beispiel über eine lösbare Kupplung mit der Basisstation verbunden sein, sodass es einfach abgenommen werden kann um es beispielsweise zu reinigen oder in einem Schrank zu verstauen. Die Arbeitsplatte kann Teil eines Geräts, wie beispielsweise eines Herds sein, oder Teil eines Möbelstücks.

Das Funktionsmodul kann alternativ zu einem Topfmodul auch als Fleischwolfmodul oder als Entsaftermodul oder als Nudelmaschinenmodul ausgeführt sein. Die Multifunktionsküchenmaschine ist insofern als System zu verstehen, als dass die Multifunktionsküchenmaschine als Verkaufseinheit mit einem Topfmodul und/oder einem Fleischwolfmodul und/oder einem Entsaftermodul angeboten wird. Topfmodul und/oder Fleischwolfmodul und/oder Entsaftermodul können aber auch als separat nachkaufbare Einheiten verstanden werden.

Gemäß einer Ausführungsform kann der Dichtungsteil in Richtung der Öffnung hin ansteigend ausgeformt sein. Beispielsweise kann das Dichtelement zur Öffnung graduell ansteigend und somit im Wesentlichen keilförmig ausgeformt sein. Bei Einsetzen zum Beispiel eines Funktionsmoduls in die Öffnung kann der keilförmige Teil des Dichtelements eng an dem Funktionsmodul anliegen. Trifft beispielsweise aus dem Funktionsmodul überkochendes Wasser auf das Dichtelement, so kann dieses entlang der Schräge von der Öffnung wegfließen. Vorteilhafterweise ist eine solch keilförmige Ausformung einfach herzustellen und verfügt über eine gute Dichtwirkung.

Gemäß einer weiteren Ausführungsform kann das Dichtelement in Richtung der von der Öffnung abgewandten Seite eine Halteplatte aufweisen. Die Halteplatte kann beispielsweise in Relation zu der breiteren, keilförmigen Ausformung des Dichtungsteils flach ausgeformt sein, also eine geringere Steigung als der Dichtungsteil haben. Das hat den Vorteil, dass das Dichtelement gut an der Arbeitsplatte anliegt, leicht befestigt werden und nicht leicht verrutschen kann.

Gemäß einer weiteren Ausführungsform kann das Dichtelement aus einem Vollmaterial bestehen. Beispielsweise kann das Dichtelement vollständig aus Silikon oder Kautschuk bestehen und als eine zusammenhängende Form gegossen sein. Das hat den Vorteil, dass es leicht und kostengünstig herzustellen und besonders stabil ist.

Gemäß einer weiteren Ausführungsform kann ein auf der Seite der Öffnung dem Dichtungsteil gegenüberliegender Dichtungsabschnitt als Nase ausgeformt sein. Aufgrund der die Öffnung vollständig umlaufenden Ausformung des Dichtelements kann der hier als Nase bezeichnete Dichtungsabschnitt auch als Wand bezeichnet werden, insbesondere die in eingesetztem Zustand in die Aufnahmekammer hineinragt. Wenn beispielsweise die in die Aufnahmekammer eingesetzte Basisvorrichtung einen Einsatz in Form einer Wanne zum Auffangen von Schmutzwasser und anderen Flüssigkeiten umfasst, dann kann die beschriebene Wand oder Nase in diesen Einsatz hineinragen, wodurch vorteilhafterweise jede eindringende Flüssigkeit direkt in den Einsatz geleitet werden kann. Dadurch kann ein möglichst guter Schutz gegen Verschmutzungen und Beschädigungen der Basisvorrichtung durch Flüssigkeiten ermöglicht werden.

Ein Aspekt ist es, dass das Dichtelement mit dem Einsatz eine Labyrinthdichtung ausbilden kann. Hierdurch wird erreicht, dass der Einfluss der Dichtung auf die Wiegefunktionalität reduziert wird.

Gemäß einer weiteren Ausführungsform kann das Dichtelement mit mindestens einem Magneten lösbar an der Arbeitsplatte fixiert oder fixierbar ausgeformt sein. Beispielsweise können ein oder mehrere Magnete in oder an der Halteplatte des Dichtelements angeordnet sein. Diesen entsprechend können Magnete auf der der Halteplatte gegenüberliegenden Seite der Arbeitsplatte angeordnet sein, sodass die jeweiligen Magnete sich bei eingesetztem Dichtelement gegenüber liegen und einander anziehen. Vorteilhafterweise entsteht so durch die magnetische Anziehungskraft eine Selbstzentrierung des Dichtelements und zudem ermöglicht ein solcher Aufbau eine gute Rutschfestigkeit als auch eine einfache Lösbarkeit und somit Reinigung.

Gemäß der Erfindung umfasst das Dichtelement ein bewegliches Element zum Bewegen zumindest eines Teils des Dichtelements.

Dabei kann das bewegliche Element beispielsweise zylindrisch ausgeformt und so angeordnet sein, dass es einen Teil des Dichtelements bei eingesetztem Funktionsmodul in Richtung des Funktionsmoduls drückt. Wird das Funktionsmodul entnommen und zum Beispiel mit einem die Öffnung verschließenden Deckel, der auch als Abdeckplatte bezeichnet werden kann, ersetzt, so kann das bewegliche Element und der damit verbundene Teil des Dichtelements wieder in Richtung der Aufnahmekammer gedrückt werden. Vorteilhafterweise kann dadurch ein möglichst bündiger Verschluss zwischen einem Deckel und der Arbeitsplatte ermöglicht werden.

Gemäß der Erfindung ist das bewegliche Element mit einem Auswurfmechanismus für einen die Öffnung abdeckenden Deckel kombiniert oder kombinierbar.

Ein solcher Auswurfmechanismus kann beispielsweise wie folgt verlaufen. Wird zum Beispiel ein Funktionsmodul, oder ein anderes passendes Gefäß, in die Öffnung eingesetzt, dann wird das bewegliche Element und damit ein Teil des Dichtelements nach oben in Richtung des Funktionsmoduls gedrückt. So kann die zuvor beschriebene keilförmige Ausformung des Dichtungsteils erzielt werden. Bei Entfernen des Funktionsmoduls kann das bewegliche Element in dieser hochgefahrenen Position bleiben bis beispielsweise ein Deckel auf die Öffnung gelegt wird. Ein solcher Deckel kann gegebenenfalls beim Verschließen der Öffnung schon leicht in das Dichtelement einsinken um ein Verrutschen des Deckels zu verhindern. Anschließend kann der Deckel heruntergedrückt werden. Dabei kann optional der Deckel weiter in das Dichtelement hineingedrückt werden um eine sichere Abdichtung gegen Flüssigkeiten von oben zu erreichen. Sobald der Deckel nicht mehr tiefer in das Dichtelement gedrückt werden kann, zum Beispiel aufgrund eines Anschlags, kann beispielsweise durch weiteren Druck auf den Deckel das bewegliche Element mit dem Dichtelement heruntergedrückt werden bis das bewegliche Element einrastet. Wenn dann beispielsweise der Deckel wieder entfernt werden soll, kann ein gegebenenfalls asymmetrischer erneuter Druck auf den Deckel erfolgen. Dadurch kann die Verriegelung des beweglichen Elements gelöst und das bewegliche Element zum Beispiel durch eingebaute Federn inklusive des Deckels hoch bewegt werden. Vorteilhafterweise kann dadurch der Deckel besser greifbar werden. Optional kann auch ein mit dem beweglichen Element verbundener Anschlag relativ zu diesem weiter hochgeschoben werden, um so den Deckel noch besser greifbar zu machen. Es kann auch möglich sein nur einen Teil des Anschlags, beziehungsweise einen Teil einer Mehrzahl von Anschlagspunkten, hochzufahren, um so den Deckel leicht schräg zu stellen und dadurch die Greifbarkeit des Deckels zu optimieren. Optional kann das Verfahren des beweglichen Elements auch motorisch erfolgen beziehungsweise teilweise motorisch unterstützt werden. Eine Kombination des beweglichen Elements mit einem Auswurfmechanismus hat den Vorteil einer einfachen Bedienbarkeit des Deckels für einen Nutzer.

Analog zu der zuvor beschriebenen Variante kann auch ein flexibles Dichtelement eingesetzt werden, welches zwischen einem "Flächenbündig-Modus" bei eingesetztem Deckel und einem "Flüssigkeitsbarrieren-Modus" bei eingesetztem Funktionsmodul wechseln kann. Im Gegensatz zu der beschriebenen Ausführungsform mit einem beweglichen Element kann der Wechsel zwischen diesen Modi beispielsweise nicht durch die Veränderung der Höhenposition eines festen Bauelements vollzogen werden, sondern durch das Füllen oder Leeren eines geschlossenen Volumens durch ein Gas oder eine Flüssigkeit.

Gemäß einer weiteren Ausführungsform kann das Dichtelement mit mindestens einem Haltepin lösbar an der Arbeitsplatte fixiert oder fixierbar ausgeformt sein. Beispielsweise können solche Haltepins ähnlich der Fixierung mit Magneten an der Halteplatte angeordnet sein. Vorteilhafterweise ist eine solche Fixierung leicht zu montieren und das Dichtelement kann zu Reinigungszwecken leicht abgenommen und wieder angebracht werden.

Zudem wird eine Aufnahmekammer vorgestellt, die eine Variante eines hier vorgestellten Dichtelements und eine Basisvorrichtung umfasst, wobei das bewegliche Element bei eingesetztem Deckel eine Kraft auf mindestens einen an der Basisvorrichtung angeordneten Sensor einer Wiegeeinheit ausübt, sodass der Sensor durch die Position des beweglichen Elements die Position des Deckels erfasst. Beispielsweise kann die Basisvorrichtung über eine Wiegeeinheit verfügen, deren Sensoren, die auch als Wiegesensoren bezeichnet werden können, ein Gewicht eines die Öffnung verschließenden Deckels sowie das Gewicht von auf dem Deckel abgelegten Objekten erfassen können. In Kombination mit einer hier vorgestellten Variante eines beweglichen Elements kann das bewegliche Element so aufgehängt sein, dass die vertikalen Kräfte bei dem Öffnungs- beziehungsweise Schließungsvorgang des Deckels ganz oder teilweise auf die Sensoren der Wiegeeinheit wirken. Dadurch kann der Vorgang und insbesondere das Einrasten in einem Signalverlauf der Sensoren detektiert werden. Vorteilhafterweise kann damit ohne zusätzliche Sensorik überwacht werden, ob ein Deckel aufgelegt ist und ob dieser eingerastet ist. Optional kann dies auch zum Beispiel dafür genutzt werden einen Motor der Basisvorrichtung bei eingelegtem Deckel dauerhaft auszuschalten.

Außerdem wird eine Arbeitsplatte mit Dichtelement gemäß einer hier vorgestellten Ausführungsform vorgestellt, insbesondere wobei das Dichtelement als unlösbarer Bestandteil der Arbeitsplatte ausgeformt ist. Wenn beispielsweise das abnehmbare Funktionsmodul der Multifunktionsküchenmaschine, zum Beispiel ein Topf mit Messer, nicht eingesetzt ist und die Öffnung durch einen Deckel, beispielsweise aus Glaskeramik analog zu einem umgebenden Kochfeld, verschlossen ist, dann kann das in das umgebende Kochfeld fest integrierte Dichtelement bündig mit den Oberflächen der Kochfeldplatte und des Deckels abschließen. Das hat den Vorteil, dass die von vielen Nutzern gewünschte flächenbündige Optik von Arbeitsplatte und Deckel auch unter Verwendung des integrierbaren Kombigeräts der Multifunktionsküchenmaschine weitergeführt werden kann.

Gemäß einer Ausführungsform kann das Dichtelement der Arbeitsplatte ausgebildet sein sich beim Einsetzen in die Öffnung an der Arbeitsfläche zu verhaken. Beispielsweise kann das Dichtelement als ein elastisches Formteil angelehnt an die zuvor beschriebenen Formvarianten ausgeformt sein, wobei es durch eine parallel zur Halteplatte angeordnete weitere Halteplatte eine im Wesentlichen U-förmige Ausformung aufweisen und die Arbeitsplatte beim Einsetzen wie eine Klammer umschließen kann. Eine solche Ausformung hat den Vorteil, dass keine zusätzlichen Bauteile, wie Magnete oder Haltepins, zur Fixierung des Dichtelements benötigt werden.

Zudem wird ein Funktionsmodul einer Multifunktionsküchenmaschine mit einem Dichtungsringkragen vorgestellt, wobei der Dichtungsringkragen umlaufend an einer Außenoberfläche des Funktionsmoduls angeordnet ist und in Richtung eines Modulbodens hin schräg von dem Funktionsmodul absteht. Beispielsweise kann der Winkel der Schrägstellung des Dichtungsringkragens bei eingesetztem Funktionsmodul dem Winkel entsprechen, in dem sich das Dichtungsteil in Richtung des Funktionsmoduls erhebt. Somit kann der Dichtungsringkragen schräg über und parallel zu dem Dichtungsteil verlaufen, wodurch eine Labyrinthdichtung gebildet werden kann. Das hat den Vorteil, dass aus dem Funktionsmodul austretende Flüssigkeiten direkt vom Bereich der Öffnung abgeleitet werden können. Durch die Kombination eines in Richtung des Dichtungsringkragen ragenden Dichtelements an der Arbeitsplatte und einem in Richtung des Dichtelements ragenden Dichtungsringkragen am Funktionsmodul lässt sich die Aufnahmekammer auf einfache Weise gegen Flüssigkeiten und/oder Verschmutzungen schützen. Außerdem können das Dichtelement und der Dichtungsringkragen vorteilhafterweise voneinander entkoppelt sein, wodurch eine an der Basisvorrichtung der Multifunktionsküchenmaschine angeordnete Wiegeeinheit freischwebend sein kann.

Auch wenn der beschriebene Ansatz anhand eines Haushaltgeräts beschrieben wird, kann die hier beschrieben Vorrichtung entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: eine Querschnittsdarstellung eines Ausführungsbeispiels einer Aufnahmekammer mit eingesetzter Multifunktionsküchenmaschine und Dichtelement;
- Figur 2: einen Querschnitt eines Ausführungsbeispiels eines Dichtelements mit beweglichem Element und eingesetztem Deckel; und
- Figur 3: einen Querschnitt eines Ausführungsbeispiels eines Dichtelements mit beweglichem Element und eingesetztem Funktionsmodul.

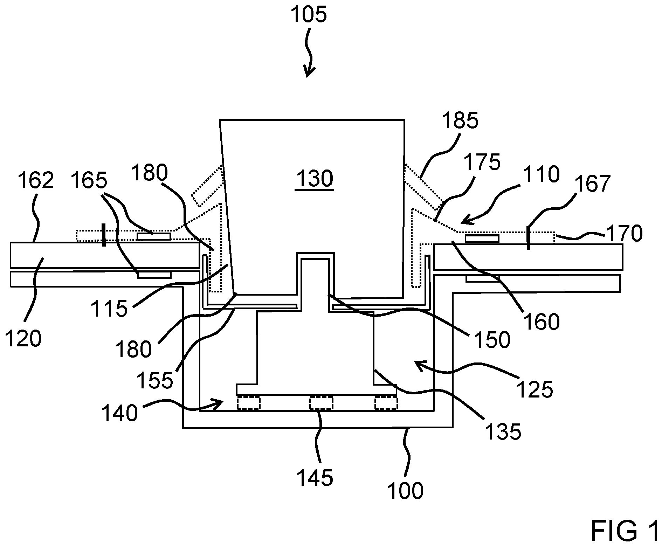

Figur 1 zeigt eine Querschnittsdarstellung eines Ausführungsbeispiels einer Aufnahmekammer 100 mit einer eingesetzten Multifunktionsküchenmaschine 105 und einem Dichtelement 110. Die Figur ist eine Darstellung von im Wesentlichen kreissymmetrischen Objekten, weshalb alle hier abgebildeten Elemente entlang einer vertikalen Spiegelachse doppelt dargestellt sind. Zur besseren Übersicht wird in dieser Beschreibung jeweils nur ein Bezugszeichen pro Seite vergeben. Die Aufnahmekammer 100 ist in diesem Ausführungsbeispiel unterhalb einer Öffnung 115 in einer Arbeitsplatte 120 angeordnet. In diesem Ausführungsbeispiel umfasst die Multifunktionsküchenmaschine 105 eine in der Aufnahmekammer 100 angeordnete Basisvorrichtung 125 und ein Funktionsmodul 130. Die in der Aufnahmekammer 100 angeordnete Basisvorrichtung 125 umfasst in diesem Ausführungsbeispiel einen Antrieb 135 unter dem eine Wiegeeinheit 140 mit drei Sensoren 145 angeordnet ist. Der Antrieb 135, beispielsweise ein Motor, ist über eine Antriebswelle 150 mit dem Funktionsmodul 130 gekuppelt. Aufgrund der in diesem Ausführungsbeispiel dargestellten Kupplung der Basisvorrichtung 125 und dem Funktionsmodul 130 kann die Aufnahmekammer 100 auch als Kupplungsmulde bezeichnet werden. Die Basisvorrichtung 125 umfasst zudem einen Einsatz 155, der schalenförmig ausgeformt ist und die Öffnung 115 mit seiner Grundfläche annähernd die gesamte Fläche der Aufnahmekammer 100 als Blende abdeckt. Ein solcher Einsatz 155 kann beispielsweise aus dem Funktionsmodul 130 austretende Flüssigkeiten auffangen, insbesondere wenn keine ausreichende Abdichtung der Öffnung 115 vorhanden sein sollte.

Das Dichtelement 110 liegt in diesem Ausführungsbeispiel mit einem Anliegeabschnitt 160 auf einer Oberfläche 162 der Arbeitsplatte 120 auf und ist mit Magneten 165 lösbar an dieser fixiert. Dabei befinden sich Magneten sowohl unterhalb der Arbeitsplatte 120, als auch in der parallel zur Arbeitsplatte 120 angeordneten Halteplatte 170 des Dichtelements 110. Alternativ kann eine solche Fixierung auch über Haltepins 167 erfolgen. In der hier gezeigten Figur ist diese Option ebenfalls dargestellt, wobei die Haltepins 167 ausschließlich als Alternative zu den Magneten 165 verstanden werden sollen. Durch eine lösbare Fixierung entweder durch Magneten 165 oder durch Haltepins 167 kann ein Nutzer das Dichtelement 110 jederzeit nach Belieben entfernen, beispielsweise zu Reinigungszwecken, und wieder einsetzen. Das auf der Arbeitsplatte 120 aufliegende Dichtelement 110 ist demnach von der hier als Basisvorrichtung 125 bezeichneten stationären Einheit der Multifunktionsküchenmaschine entkoppelt und wird über eine geeignete Verbindung, wie zum Beispiel Haltepins 167 (Pins) oder Magnete 165 in Position gehalten.

An der der Öffnung 115 zugewandten Seite des Dichtelements 110 verbreitert sich dieses und das Dichtungsteil 175 hat einen Anstieg in Richtung des Funktionsmoduls 130. In gegenläufiger Richtung dieser Erhebung im Bereich der Öffnung 115 erstreckt sich eine Nase 180 zwischen dem Funktionsmodul 130 und der Arbeitsplatte 120 hinunter in den Bereich des Einsatzes 155. Falls beispielsweise Flüssigkeit in den Bereich zwischen dem Funktionsmodul 130 und dem Dichtelement 110 eindringt, dann kann diese ausschließlich in den zum Auffangen von eben solchen Flüssigkeiten ausgebildeten Einsatz 155 gelangen, der optional entnehmbar ausgeformt sein kann. Auf diese Weise kann der unterhalb des Einsatzes 155 angeordnete Teilbereich der Basisvorrichtung 125 optimal vor Flüssigkeiten oder Verschmutzungen geschützt werden.

Am Funktionsmodul 130 ist ein Dichtungsringkragen 185 angeordnet, der im gleichen Winkel schräg nach unten in Richtung des Modulbodens 187 läuft in dem das Dichtungsteil 175 nach oben strebt. Durch eine solche Kombination des Dichtungsringkragens 185 mit dem Dichtelement 110 entsteht eine als Labyrinthdichtung ausgeformte Dichtung, die die Öffnung 115 optimal gegen auftretende Flüssigkeiten abgedichtet, insbesondere wenn solche Flüssigkeiten aus dem Funktionsmodul 130 austreten. Wenn beispielsweise im Verlauf eines Kochvorgangs Wasser im Funktionsmodul 130 überkochen sollte, dann kann der Dichtungsringkragen 185 es vom Funktionsmodul 130 weg leiten, so dass es auf das Dichtelement 110 treffen und die Öffnung 115 geschützt bleiben kann. Gleichzeitig sind der Dichtungsringkragen 185 und das Dichtelement 110 in diesem Ausführungsbeispiel voneinander entkoppelt, um die Funktionalität der Wiegeeinheit 140 nicht zu beeinflussen.

Somit können die Sensoren 145 ein in das Funktionsmodul 130 eingefülltes Gewicht erfassen ohne von der zuvor beschriebenen Dichtungskombination beeinträchtigt zu werden.

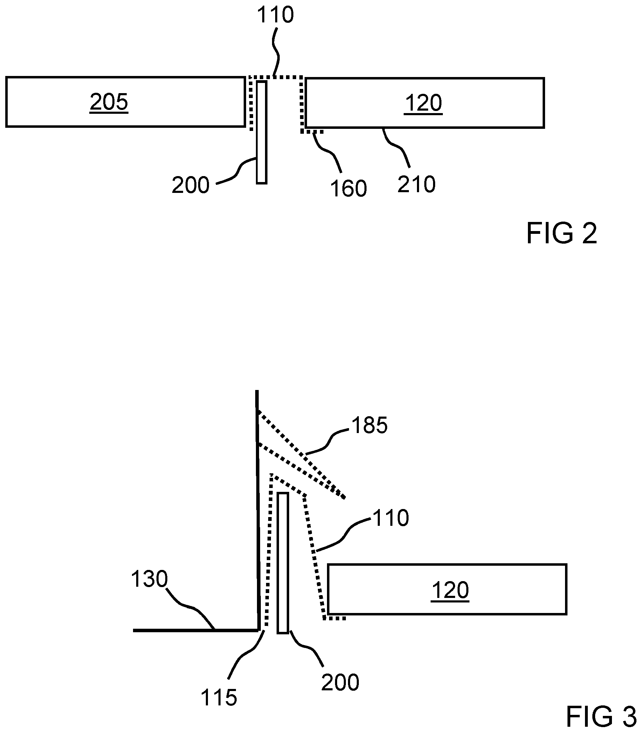

Figur 2 zeigt eine Querschnittsdarstellung eines Ausführungsbeispiels eines Dichtelements 110 mit beweglichem Element 200 und eingesetztem Deckel 205. In diesem Ausführungsbeispiel ist das Dichtelement 110 zwischen der Arbeitsplatte 120 und einem Deckel 205 angeordnet. Dabei liegt der Anliegeabschnitt 160 in diesem Ausführungsbeispiel an der unteren Oberfläche 210 der Arbeitsplatte 120 an. Unterhalb des Dichtelements 110 ist ein im Wesentlichen zylinderförmiges bewegliches Element 200 angeordnet, das in diesem Ausführungsbeispiel teilweise von dem Dichtelement 110 umschlossen ist. Das Dichtelement 110 schließt dabei ebenmäßig mit dem Deckel 205 und der Arbeitsplatte 120 ab und das bewegliche Element 200 ist in einer Position angeordnet, die nicht über den Horizont der Arbeitsplatte 120 und des Deckels 205 hinausragt. Auf diese Weise kann eine von vielen Nutzern erwünschte flächenbündige Optik der Arbeitsplatte erreicht werden. Wenn beispielsweise der Deckel 205 abgenommen wird, kann das Dichtelement 110 durch die zusätzliche Einrichtung eines beweglichen Elements 200 hochgedrückt werden, um die in Figur 1 beschriebene Labyrinthdichtung zu ermöglichen.

Figur 3 zeigt eine Querschnittsdarstellung eines Ausführungsbeispiels eines Dichtelements 110 mit beweglichem Element 200 und eingesetztem Funktionsmodul 130. In diesem Ausführungsbeispiel ist das bewegliche Element 200 so angeordnet, dass ein Ende über den Horizont der Arbeitsplatte 120 hinausragt, wodurch das Dichtelement 110 nach oben in Richtung des Funktionsmoduls 130 gedrückt wird. Die Positionsänderung des beweglichen Elements 200 kann beispielsweise durch Federn oder einen Motor erfolgen. Wird zum Beispiel ein Funktionsmodul 130 in die Öffnung 115 eingesetzt, dann wird das bewegliche Element 200 nach oben gedrückt, so dass das Dichtelement 110 eine keilförmige Ausformung erhält und so eine Barriere zwischen der Arbeitsplatte 120 und der Öffnung 115 bildet. Durch einen solchen Mechanismus können Flüssigkeiten effektiv von der Öffnung 115 ferngehalten werden. Am Funktionsmodul 130 ist ein Dichtungsringkragen 185 angeordnet, der in Kombination mit dem hochgedrückten Dichtelement 110 eine Labyrinthdichtung ausformt, wie sie in Figur 1 beschrieben wurde. Optional kann das Hoch- und Herunterfahren des beweglichen Elements 200 auch mit einem Auswurfmechanismus für den Deckel, wie er in Figur 2 beschrieben wurde, verbunden sein.

## Patentansprüche

1. Dichtelement (110) für eine in eine Arbeitsplatte (120) integrierte Öffnung (115) einer zur Aufnahme einer Basisvorrichtung (125) einer Multifunktionsküchenmaschine (105) ausgeformten Aufnahmekammer (100),
und wobei das Dichtelement (110) ausgeformt ist, die Öffnung (115) umlaufend zu umschließen,
und wobei das Dichtelement (110) ausgeformt ist
an einem Anliegeabschnitt (160) an einer Oberfläche (162; 210) der Arbeitsplatte (120) oder
an einer die Öffnung (115) begrenzenden Mantelfläche der Arbeitsplatte (120) flächenbündig an der Arbeitsplatte anzuliegen,
und wobei das Dichtelement (110) im Gebrauch
mit einem von dem Mittelpunkt der Öffnung (115) distalen Rand flächenbündig zu der Oberfläche (162; 210) der Arbeitsplatte (120) ausgeführt ist
und/oder
mit einem Dichtungsteil (175) des Dichtelements (110) an einer dem Mittelpunkt der Öffnung (115) zugewandten Seite weiter von der Ebene der Oberfläche (162; 210) der Arbeitsplatte (120) beabstandet ist als an einer dem Mittelpunkt der Öffnung (115) abgewandten Seite des Dichtelements (110),
**dadurch gekennzeichnet, dass**
das Dichtelement (11) mit einem beweglichen Element (200) zum Bewegen zumindest eines Teils des Dichtelements (110) ausgeführt ist wobei das bewegliche Element (200) mit einem Auswurfmechanismus für einen die Öffnung (115) abdeckenden Deckel (205) kombiniert oder kombinierbar ist.

2. Dichtelement (110) gemäß Anspruch 1, **wobei** der Dichtungsteil (175) in Richtung der Öffnung (115) hin ansteigend ausgeformt ist.

3. Dichtelement (110) gemäß einem der vorangegangenen Ansprüche, **wobei** das Dichtelement (110) das in Richtung der von der Öffnung (115) abgewandten Seite eine Halteplatte (170) aufweist.

4. Dichtelement (110) gemäß einem der vorangegangenen Ansprüche, **wobei** das Dichtelement (110) aus einem Vollmaterial besteht.

5. Dichtelement (110) gemäß einem der vorangegangenen Ansprüche, **wobei** ein auf der Seite der Öffnung (115) dem Dichtungsteil (175) gegenüberliegender Dichtungsabschnitt als Nase (180) ausgeformt ist.

6. Dichtelement (110) gemäß einem der vorangegangenen Ansprüche, **wobei** das Dichtelement (110) mit mindestens einem Magneten (165) lösbar an der Arbeitsplatte (120) fixierbar ausgeformt ist.

7. Dichtelement (110) gemäß einem der vorangegangenen Ansprüche, **wobei** das Dichtelement (110) mit mindestens einem Haltepin (167) lösbar an der Arbeitsplatte (120) fixierbar ausgeformt ist.

8. Aufnahmekammer (100), die ein Dichtelement (110) gemäß einem der Ansprüche 1 bis 7 und eine Basisvorrichtung (125) umfasst,
wobei das bewegliche Element (200) bei eingesetztem Deckel (205) eine Kraft auf mindestens einen an der Basisvorrichtung (125) angeordneten Sensor (145) einer Wiegeeinheit (140) ausübt, sodass der Sensor (145) durch die Position des beweglichen Elements (200) die Position des Deckels (205) erfasst.

## Claims

1. Sealing element (110) for an opening (115) integrated into a worktop (120) of a receiving chamber (100) formed to receive a base device (125) of a multifunctional kitchen appliance (105),
and the sealing element (110) being formed to enclose the opening (115) all around,
and the sealing element (110) being formed to lie against
a contact portion (160) on a surface (162; 210) of the worktop (120) or
a skirt surface of the worktop (120) bordering the opening (115) so as to be flush with the worktop,
and the sealing element (110), in use,
being flush with the surface (162; 210) of the worktop (120) at an edge distal from the centre of the opening (115)
and/or
being, at a sealing part (175) of the sealing element (110), spaced further from the plane of the surface (162; 210) of the worktop (120) on a side which faces the centre of the opening (115) than on a side of the sealing element (110) which faces away from the centre of the opening (115),
**characterised in that**
the sealing element (11) has a movable element (200) for moving at least a part of the sealing element (110)
the movable element (200) being combined or combinable with an ejection mechanism for a lid (205) covering the opening (115).

2. Sealing element (110) according to claim 1, **wherein** the sealing part (175) is formed so as to rise towards the opening (115).

3. Sealing element (110) according to either of the preceding claims, **wherein** the sealing element (110) which has a holding plate (170) in the direction of the side facing away from the opening (115).

4. Sealing element (110) according to any of the preceding claims, **wherein** the sealing element (110) consists of a solid material.

5. Sealing element (110) according to any of the preceding claims, **wherein** a sealing portion opposite the sealing part (175) on the side of the opening (115) is formed as a tab (180).

6. Sealing element (110) according to any of the preceding claims, **wherein** the sealing element (110) is detachably fixable to the worktop (120) by means of at least one magnet (165).

7. Sealing element (110) according to any of the preceding claims, **wherein** the sealing element (110) is detachably fixable to the worktop (120) by means of at least one retaining pin (167).

8. Receiving chamber (100) which comprises a sealing element (110) according to any of claims 1 to 7 and a base device (125),
wherein the movable element (200), when the lid (205) is inserted, exerts a force on at least one sensor (145) of a weighing unit (140) arranged on the base device (125), so that the sensor (145) detects the position of the lid (205) through the position of the movable element (200).

## Revendications

1. Élément d'étanchéité (110) pour une ouverture (115), intégrée dans un plan de travail (120), d'une chambre de réception (100) formée pour recevoir un dispositif formant base (125) d'un robot ménager multifonction (105),
et dans lequel l'élément d'étanchéité (110) est formé pour entourer l'ouverture (115) de manière circonférentielle,
et dans lequel l'élément d'étanchéité (110) est formé pour s'appuyer
contre une section d'appui (160) sur une surface (162 ; 210) du plan de travail (120) ou
en affleurement avec le plan de travail contre une surface d'enveloppe, laquelle délimite l'ouverture (115), du plan de travail (120),
et dans lequel l'élément d'étanchéité (110), lors du fonctionnement,
est réalisé en affleurement avec la surface (162 ; 210) du plan de travail (120) avec un bord distal par rapport au centre de l'ouverture (115)
et/ou
avec une partie d'étanchéité (175) de l'élément d'étanchéité (110), est plus espacé du plan de la surface (162 ; 210) du plan de travail (120) sur un côté tourné vers le centre de l'ouverture (115) que sur un côté de l'élément d'étanchéité (110) éloigné du centre de l'ouverture (115),
**caractérisé en ce que**
l'élément d'étanchéité (11) est réalisé avec un élément déplaçable (200) permettant de déplacer au moins une partie de l'élément d'étanchéité (110)
dans lequel l'élément déplaçable (200) est combiné ou peut être combiné avec un mécanisme d'éjection pour un élément de recouvrement (205) recouvrant l'ouverture (115).

2. Élément d'étanchéité (110) selon la revendication 1, dans lequel la partie d'étanchéité (175) est formée de manière à s'élever en direction de l'ouverture (115).

3. Élément d'étanchéité (110) selon l'une des revendications précédentes, dans lequel l'élément d'étanchéité (110) présente la une plaque de maintien (170) en direction du côté opposé à l'ouverture (115).

4. Élément d'étanchéité (110) selon l'une des revendications précédentes, dans lequel l'élément d'étanchéité (110) est constitué d'un matériau plein.

5. Élément d'étanchéité (110) selon l'une des revendications précédentes, dans lequel une section d'étanchéité opposée à la partie d'étanchéité (175) sur le côté de l'ouverture (115) est formée en tant qu'ergot (180).

6. Élément d'étanchéité (110) selon l'une des revendications précédentes, dans lequel l'élément d'étanchéité (110) est formé de manière à pouvoir être fixé de manière amovible au plan de travail (120) avec au moins un aimant (165).

7. Élément d'étanchéité (110) selon l'une des revendications précédentes, dans lequel l'élément d'étanchéité (110) est formé de manière à pouvoir être fixé de manière amovible au plan de travail (120) avec au moins une broche de retenue (167).

8. Chambre de réception (100) comprenant un élément d'étanchéité (110) selon l'une des revendications 1 à 7 et un dispositif formant base (125),
dans laquelle, lorsque l'élément de recouvrement (205) est mis en place, l'élément déplaçable (200) exerce une force sur au moins un capteur (145) d'une unité de pesage (140) disposé sur le dispositif formant base (125), de sorte que le capteur (145) détecte la position de l'élément de recouvrement (205) au moyen de la position de l'élément déplaçable (200).
